# EUROPÄISCHE PATENTSCHRIFT

(11) **EP 2 403 812 B1**
(45) Veröffentlichungstag und Bekanntmachung des Hinweises auf die Patenterteilung: **14.11.2018**
(21) Anmeldenummer: 10706552.6
(22) Anmeldetag: 03.03.2010
(51) Int. Cl.: C03C 3/064, C03C 8/24, H01M 8/02, C03C 27/04, C03C 27/10, C03C 29/00

(54) **KRISTALLISIERENDES GLASLOT UND DESSEN VERWENDUNG**
CRYSTALLIZING GLASS SOLDER AND USE THEREOF
VERRE DE SOUDURE CRISTALLISANT ET SON UTILISATION

(30) Priorität: 04.03.2009 DE 102009011182; 15.02.2010 EP 10001512
(43) Veröffentlichungstag der Anmeldung: 11.01.2012
(73) Patentinhaber: Schott AG, 55122 Mainz (DE)
(72) Erfinder: GÖDEKE, Dieter, 84028 Landshut (DE); BRIX, Peter, 55116 Mainz (DE); CLAUSSEN, Olaf, 55278 Undenheim (DE); BESINGER, Jörn, 67071 Ludwigshafen (DE); SCHÖN, Bastian, 84028 Landshut (DE)
(74) Vertreter: Fuchs Patentanwälte Partnerschaft mbB
(86) Internationale Anmeldenummer: PCT/EP2010/001301
(87) Internationale Veröffentlichungsnummer: WO 2010/099939

(56) Entgegenhaltungen:
- DD-A5- 292 901
- DE-A1-102005 002 435
- SU-A1- 802 220
- US-A1- 2006 019 813
- US-A1- 2008 090 715
- US-B1- 6 348 427
- US-B1- 6 362 119
- DATABASE WPI Week 200576 Thomson Scientific, London, GB; AN 2005-739189 -& JP 2005 298259 A (MURATA MFG CO LTD) 27 October 2005 (2005-10-27)

## Beschreibung

Die vorliegende Erfindung betrifft kristallisierende Glaslote und Komposite, die insbesondere für Hochtemperaturanwendungen geeignet sind, und deren Anwendungen.

Glaslote werden üblicherweise zum Herstellen von Fügeverbindungen eingesetzt, um insbesondere Glas- und/oder keramische Bauteile miteinander oder mit Bauteilen aus Metall zu verbinden. Bei der Entwicklung von Glasloten wird deren Zusammensetzung oftmals so gewählt, dass der thermische Ausdehnungskoeffizient des Glaslotes in etwa dem der miteinander zu verbindenden Bauteile entspricht, um eine dauerhaft stabile Fügeverbindung zu erhalten. Gegenüber anderen Fügeverbindungen, beispielsweise solchen aus Kunststoff, haben solche basierend auf Glasloten den Vorteil, dass sie hermetisch dicht ausgeführt werden können und höheren Temperaturen standhalten können.

Glaslote werden im allgemeinen oftmals aus einem Glaspulver hergestellt, das beim Lötvorgang aufgeschmolzen wird und unter Wärmeeinwirkung mit den zu verbindenden Bauteilen die Fügeverbindung ergibt. Die Löttemperatur wird in der Regel etwa in Höhe der so genannten Halbkugeltemperatur des Glases gewählt oder kann üblicherweise um ± 20 K von dieser abweichen. Die Halbkugeltemperatur kann in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 zuordnen, wie entsprechender Fachliteratur entnommen werden kann. Wird ein kristallisationsfreies Glas in Form eines Glaspulvers aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glaslot, dass die Betriebstemperatur, welcher die Fügeverbindung dauerhaft ausgesetzt sein kann, nicht höher als die Löttemperatur sein darf. Tatsächlich muss die Betriebstemperatur bei vielen Anwendungen noch signifikant unter der Löttemperatur liegen, da die Viskosität des Glaslotes bei steigenden Temperaturen abnimmt und ein gewissermaßen fließfähiges Glas bei hohen Temperaturen und/oder Drücken aus der Fügeverbindung herausgepresst werden kann, so dass diese Ihren Dienst versagen kann.

Aus diesem Grund müssen nichtkristallisierende Glaslote für Hochtemperaturanwendungen üblicherweise eine Löttemperatur bzw. Halbkugeltemperatur aufweisen, welche noch deutlich über der späteren Betriebstemperatur liegt. Ein Problem, das durch die im Vergleich zur späteren Betriebstemperatur deutlich höhere Löttemperatur entstehen kann, ist die Schädigung der miteinander zu verbindenden Bauteile. Daher sind Glaslote erwünscht, welche zwar eine möglichst geringe Löttemperatur aufweisen, aber dennoch eine möglichst hohe Betriebstemperatur ermöglichen. Dies bedeutet, dass die gewünschten Glaslote nach einem ersten Lötvorgang nur noch bei einer höheren Temperatur als der Löttemperatur wieder aufschmelzbar sein sollten.

Mit reinen nichtkristallisierenden Glasloten ist dies nicht ohne weiteres zu erreichen. Glaslote, die solchen Anforderungen erfüllen, können jedoch erhalten werden, wenn das Grundglas beim Lötvorgang zumindest teilweise kristallisiert, wobei die kristallinen Phasen deutlich von dem Grundglas abweichende Eigenschaften z.B. bzgl. der thermischen Ausdehnung aufweisen können, insbesondere aber die für das Wiederaufschmelzen benötigte Temperatur in der Regel deutlich über der des Grundglases liegt. Die Eigenschaften eines zumindest teilweise kristallisierten Glaslotes können direkt durch die Zusammensetzung des ursprünglichen Grundglases beeinflusst werden, aber auch durch geeignete Füllstoffe, welche in der Regel eine kristalline Struktur aufweisen und dem Lotglas hinzugefügt werden. Die Mischung aus Glaslot und Füllstoff wird in dieser Offenbarung als Komposit genannt.

Die Kristallisationseigenschaften des Glaslotes und/oder Komposites sind von herausragender Bedeutung für die Verarbeitungseigenschaften bei der Erzeugung der Fügeverbindung sowie die Haltbarkeit der Fügeverbindung. Der Fügeprozess umfasst im Allgemeinen ein Aufheizen auf eine Fügetemperatur, das Einbringen des Glaslotes bei der Fügetemperatur in die Fügestelle und eine Kristallisationsphase, bei der Werkstück und Glaslot auf einer Kristallisationstemperatur unterhalb der Fügetemperatur gehalten werden. Das Glaslot soll optimalerweise beim Aufheizen noch nicht oder nur langsam kristallisieren, da es, sonst die zu fügenden Oberflächen nicht gut benetzt, was durch eine deutlich höhere Fügetemperatur kompensiert werden müsste. Durch erhöhte Fügetemperaturen kann es bei metallischen Bestandteilen der Fügeverbindung zu unerwünschten Oxidationsreaktionen kommen. Eine entstehende Oxidschicht einer gewissen Dicke kann bereits beim Lötvorgang abplatzen und so eine dichte Verbindung verhindern. Ferner steigt bei solch hohen Löttemperaturen die Verdampfung von Cr aus Stählen, die oftmals Bestandteil der Bauteile der Fügeverbindung sind. Beim Abkühlen der Temperatur in der Kristallisationsphase soll möglichst schnell eine Kristallisation erfolgen, wobei jedoch optimalerweise das Glaslot nicht vollständig kristallisiert sondern eine amorphe, glasige Phase zurückbleibt. Diese Restglasphase verhindert ein sprödes Verhalten des Glaslotes und kann sogar zur Ausheilung von Rissen in der Füge beitragen.

Ein Einsatzgebiet solcher Glaslote und/oder Komposite sind z.B. Fügeverbindungen in Hochtemperaturbrennstoffzellen, welche z.B. als Energiequelle in Kraftfahrzeugen eingesetzt werden können. Ein wichtiger Brennstoffzellentyp sind beispielsweise die so genannten SOFC (solid oxid fuel cell), welche sehr hohe Betriebstemperaturen von bis zu etwa 1000 °C aufweisen können. Die Fügeverbindung mit dem Glaslot wird dabei üblicherweise zur Herstellung von Brennstoffzellen-Stacks, d.h. für die Verbindung mehrerer einzelner Brennstoffzellen zu einem Stack verwendet. Solche Brennstoffzellen sind bereits bekannt und werden kontinuierlich verbessert. Insbesondere geht der Trend in der aktuellen Brennstoffzellenentwicklung im allgemeinen zu geringeren Betriebstemperaturen. Einige Brennstoffzellen erreichen schon Betriebstemperaturen unter 800 °C, so dass eine Absenkung der Löttemperaturen möglich und aufgrund der dann geringen Temperaturbelastung der SOFC-Komponenten beim Lötprozess auch erwünscht ist.

Neben der Hochtemperaturbeständigkeit und den Verarbeitungseigenschaften der Glaslote ist z.B. in der Hochtemperaturbrennstoffzelle auch eine geringe elektrische Leitfähigkeit der Glaslote erforderlich, was im allgemeinen alkalifreie Lote erfordert.

Des Weiteren besteht in diesem Bereich die Anforderung, dass die Lote frei von Stoffen wie Pb sein müssen, einem für Glaslote sehr häufigen Bestandteil mit großem Einfluss auf Kristallisation und Verarbeitungseigenschaften.

Die DE 19857057 C1 beschreibt ein alkalifreies, glaskeramisches Lot mit einem thermischen Ausdehnungskoeffizienten α(20-950) von 10,0·10⁻⁶ K⁻¹ bis 12,4·10⁻⁶ K⁻¹. Das dort beschriebene Lot enthält MgO von 20 bis 50 mol-%. Hoch MgO-haltige Gläser sind in der Praxis stark kristallisationsempfindlich, was zu schnell und stark kristallisierenden Verbindungen führt. Bei einer solch schnellen und starken Kristallisation ist es schwierig, eine gute Benetzung des Interkonnektormaterials durch das Glaslot zu gewährleisten. Dies ist aber erforderlich, um eine den jeweiligen Anforderungen optimal genügende Fügeverbindung bereitstellen zu können.

Ebenfalls glaskeramische Lote werden in der US 6,532,769 B1 und US 6,430,966 B1 beschrieben. Diese sind für Löttemperaturen von etwa 1150 °C ausgelegt und enthalten 5 bis 15 mol-% Al₂O₃. Solch hohe Löttemperaturen sind für moderne Brennstoffzellen unerwünscht, da sie die metallischen Substratmaterialien und andere temperatursensitive Materialien zu stark belasten.

Die DE 10 2005 002 435 A1 beinhaltet Kompositlote, die aus einer amorphen Glasmatrix und einer kristallinen Phase bestehen. Die Glasmatrix weist dabei hohe Gehalte von CaO auf, was jedoch zu relativ hohen Viskositäten, sehr starker Kristallisation und hohen dielektrischen Verlusten führt.

US 2008/090715 A1 offenbart ein für Brennstoffzellen geeignetes kristallisierendes Glaslot, welches einen geringen BaO Gehalt aufweist. In der kristallinen Phase können Wollastonit oder Enstatit enthalten sein. SU 802220 offenbart ein Glaslot ohne CaO, MgO und/oder SrO.

Ferner sind auch Zusammensetzungen für glaskeramische Substrate bekannt (z.B. JP 2005298259 A2), die aus einem Glaspulver und einem keramischen Pulver bestehen. Indem sich beim Aufheizen das keramische Pulver in der Schmelze des Glaspulvers löst, wird die Zusammensetzung der Schmelze so verändert, dass sich die gewünschten Kristallphasen bilden.
Im Rahmen dieser Offenbarung umfasst der Begriff "kristallisierendes Glaslot" Glaslote, die während des Lötprozesses oder vorzugsweise in einem anschließenden Prozess zumindest teilweise kristallisieren, wobei auch noch amorphe, glasige Phasen in dem Glaslot vorhanden sein können. Entsprechend wird der Zustand der Glaslote nach der Verarbeitung als kristallisiert bezeichnet, auch wenn noch amorphe, glasige Phasen in dem Glaslot vorhanden sein können.
Der Erfindung liegt daher die Aufgabe zugrunde, ein alkali- und bleifreies Lotglas zur Verfügung zu stellen, sowie ein kristallisierendes Glaslot bzw. ein Komposit beinhaltend dieses Lotglas, welches bei einer Löttemperatur von maximal etwa 1100 °C zu verarbeiten ist, dessen Viskosität nach Abschluss des Lötprozesses bei Betriebstemperaturen bis etwa 850 °C noch so hoch ist, dass es nicht aus der Fügeverbindung herausgepresst wird und/oder aus dieser herausfließt und dessen thermische Ausdehnung im Temperaturbereich von 20 °C bis 300 °C α₍₂₀₋₃₀₀₎ im kristallisierten Zustand im Bereich von 8,0·10⁻⁶ K⁻¹ bis 13,0·10⁻⁶ K⁻¹ liegt und damit an geeignete Stähle angepasst ist. Das kristallisierende Glaslot soll nicht beim Aufschmelzen zum Einbringen in die Fügestelle kristallisieren, und nach dem Kristallisationsprozess einen kristallinen Anteil von mindestens 20 Gew.-% und höchstens 80 Gew.-% aufweisen.
Aufgabe ist weiterhin, dass die lineare thermische Ausdehnung des kristallisierenden Glaslotes im glasigen Zustand und im kristallisierten Zustand keine zu große Differenz aufweist, da sonst durch den Kristallisationsprozess mechanische Spannungen in der Verschmelzung entstehen, die deren Stabilität gefährden. Ebenso dürfen sich bei der Kristallisation keine unerwünschten Kristallphasen mit stark abweichender thermischer Ausdehnung bilden, welche zur mechanischen Zerstörung der Fügeverbindung führen können.
Die Aufgabe wird gelöst durch die kristallisierenden Glaslote und/oder Komposite gemäß den unabhängigen Ansprüchen. Bevorzugte Ausführungsformen ergeben sich aus den abhängigen Ansprüchen.
Erfindungsgemäß enthält das kristallisierende Glaslot (in Gew.-% auf Oxidbasis) 45 % bis 60 % BaO, 25 % bis 40 % SiO₂, 5 % bis 15 % B₂O₃, 0 % bis <2 % Al₂O₃, sowie zumindest ein Erdalkalioxid aus der Gruppe MgO, CaO und SrO, wobei CaO 0 % bis 5 % beträgt und die Summe der Erdalkalioxide MgO, CaO und SrO 2 % bis 20 % beträgt. Weitere Zusätze sind möglich. Der Begriff kristallisierendes Glaslot umfasst im Sinne der Erfindung sowohl das amorphe Grundglas, welches als Lotglas vor dem Lötvorgang eingesetzt wird, als auch das aus dem Grundglas beim Lötvorgang entstehende Material, das unter anderem glasig, kristallisiert, teilkristallisiert, glaskeramisch oder in sonstiger Form vorliegen kann.

Das kristallisierende Glaslot enthält erfindungsgemäß 45 % bis 60 % BaO (in Gew.-% auf Oxidbasis). Bei Bariumoxidanteilen größer als 60 % kann das Glaslot zur Bildung von Bariumsilikat-Kristallen neigen. Bei einem Bariumoxidanteil von kleiner 45 % kann der gewünschte thermische Ausdehnungskoeffizient nicht erzielt werden. Je nach weiteren Glasbestandteilen und deren Atomgewichten werden die kristallisationsstabilsten Gläser mit erfindungsgemäßer thermischer Ausdehnung bei einem Bariumoxidgehalt von 50 % bis 58 % erhalten. Bevorzugt enthält das erfindungsgemäße kristallisierende Glaslot daher 45 % bis 58 % BaO.
Das kristallisierende Glaslot enthält mindestens eine Erdalkalioxid aus der Gruppe MgO, CaO und SrO. Mit diesen Komponenten kann Einfluss auf das Kristallisationsverhalten und die therm. Ausdehnung des Glaslotes genommen werden. Überraschenderweise wurde bei den erfindungsgemäßen Glasloten gefunden, dass durch die Zugabe von MgO im Austausch zu SiO₂ die Kristallisationsneigung unterdrückt werden kann. Ein weiterer positiver Effekt ist, dass der dielektrische Verlust durch MgO-haltige Gläser gesenkt werden kann. Ferner können durch die netzwerkwandelnden Erdalkalioxide die Schmelztemperaturen und die Glasübergangstemperatur verringert werden. Die Zufuhr von MgO im Austausch mit Al₂O₃ oder SiO₂ bewirkt ferner eine Erhöhung des thermischen Ausdehnungskoeffizienten und stellt damit eine einfache Möglichkeit dar, das Glaslot an die zu verschmelzenden Bauteile anzupassen. Das erfindungsgemäße Glaslot enthält daher 2 % bis 20 % MgO und/oder CaO und/oder SrO und bevorzugt 2 % bis 15 % MgO und/oder CaO und/oder SrO (in Gew.-% auf Oxidbasis).
Der B₂O₃-Gehalt beeinflusst neben dem Kristallisationsverhalten auch das Einschmelzverhalten und damit die Glasschmelze positiv. Der B₂O₃-Gehalt beträgt deswegen mindestens 5 %. Ein zu hoher B₂O₃-Gehalt kann sich hingegen negativ auf die chemische Beständigkeit des Glaslotes auswirken. Des Weiteren kann es bei B₂O₃-Gehalten über 15 % zu Boroxidausdampfungen aus dem Glaslot kommen, was ebenfalls unerwünscht ist. Das kristallisierende Glaslot enthält daher bevorzugt 5 % bis 15 % B₂O₃ (in Gew.-% auf Oxidbasis).

Die Erfinder haben erkannt, dass sich ein Al₂O₃-Gehalt über 2 % eines Glaslotes negativ auf dessen Eigenschaften auswirkt. Der Al₂O₃-Gehalt ist in der vorliegenden Erfindung daher auf bis zu 2 % Al₂O₃ (Gew.-%) beschränkt. Der geringe Anteil von Al₂O₃ des erfindungsgemäßen kristallisierenden Glaslotes bewirkt, dass sich unerwünschte Kristallphasen wie BaAl₂Si₂O₈, sog. Bariumfeldspate, nicht bilden können. Von der Verbindung BaAl₂Si₂O₈ existieren zwei Phasen mit stark unterschiedlichem thermischen Ausdehnungskoeffizienten: Celsian mit einem thermischen Ausdehnungskoeffizienten von 2,2·10⁻⁶ K⁻¹ und Hexacelsian mit einem thermischen Ausdehnungskoeffizienten von 7,1·10⁻⁶ K⁻¹, wobei das Hexacelsian bei höheren Temperaturen als das Celsian stabil ist. Beim Abkühlen eines Glaslotes, beispielsweise in einer Fügeverbindung einer Brennstoffzelle, kann es unter 300 °C zu einer Umwandlung der Hexacelsian- in die Celsian-Phase kommen. Diese Umwandlung ist mit einem Volumensprung von etwa 3 % oder mehr verbunden, wodurch starke mechanische Spannungen auftreten und die Fügeverbindung zerstört werden kann. Das erfindungsgemäße Glaslot unterbindet die Entstehung dieser Kristallphasen und erhöht damit die Ausfallsicherheit der Fügeverbindungen.

Eine weitere unerwünschte Kristallphase ist Mg₂Al₄Si₅O₁₈, auch als Cordierit bekannt, welche in Anwesenheit von Al₂O₃ und MgO entstehen kann. Cordierit weist einen sehr kleinen thermischen Ausdehnungskoeffizienten von ca. 1,5·10⁻⁶ K⁻¹ auf. Auch diese Kristallphase passt mit ihrem Dehnungsverhalten nicht zu der Mehrzahl von Hochtemperaturanwendungen wie beispielsweise Fügeverbindungen in Brennstoffzellen. Das erfindungsgemäße kristallisierende Glaslot unterbindet auch die Entstehung der Cordierit-Phase durch seinen geringen Gehalt von Al₂O₃.

Die Erfinder haben desweiteren erkannt, dass sich insbesondere ein zu hoher CaO-Gehalt des Glaslotes negativ auf dessen Eigenschaften auswirkt. CaO beeinflusst das Kristallisationsverhalten sehr stark, da es zu Gläsern mit einer geringeren Aktivierungsenergie der Kristallisation führt. Dadurch neigen die mit höherem CaO-Gehalt erhaltenen Gläser zu stark zur Kristallisation und kristallisieren schon beim Aufheizen auf die Löttemperatur weitgehend vollständig und nicht erst nach dem Einbringen des Lotes bzw. des Komposites in die Lötstelle. Entsprechende Lote benetzen die zu verbindenden Teile deswegen schlechter und es besteht eine erhöhte Gefahr des Versagens der Fügeverbindung. Die Kristallisationsneigung kann durch geringe PbO-Gehalte unterdrückt werden, jedoch sollen die Lotgläser der vorliegenden Erfindung bleifrei sein.

Ein weiterer Nachteil besteht darin, dass bei CaO-Gehalten über 5 % bei der Kristallisation neben der dominierenden, erwünschten Bariumsilicat- Kristallphase eine weitere Ca-haltige Kristallphase ausgeschieden werden kann. Das ist zum einen nachteilhaft, weil die Bildung mehrerer Kristallphasen nachteilig für die Langzeitstabilität des Lotes sein kann. Hier besteht die Gefahr einer zu starken Nachkristallisation und oder Reaktion von Kristallphasen, so dass sich die thermomechanischen Eigenschaften des Lotes ändern können. Bei Temperaturen >600°C kann es zu Reaktionen zwischen CaSiO₃ (Wollastonit) und CO₂ zu CaCO₃ und SiO₂ kommen. Die Carbonatphasen wiederum können sich bei Temperaturen ab 900°C zersetzen und zu unerwünschter Blasenbildung beitragen.
Zum anderen ist die Kristallphase CaO·Al₂O₃·2SiO₂ kritisch, da sie einen niedrigen thermischen Ausdehnungskoeffizienten von nur 5,4·10⁻⁶/K besitzt, die von ihrem Dehnungsverhalten nicht an die Hochtemperaturanwendung angepasst ist. Der CaO-Gehalt beträgt daher bei den vorliegenden Glasloten von 0 % bis 5%.

Bevorzugt beträgt der CaO-Gehalt aus den genannten Gründen 0 % bis 3 %. In diesem Bereich werden Glaslote erhalten, welche sich durch gute Verarbeitungseigenschaften und insbesondere gutes Benetzungsverhalten auszeichnen und bei dem Kristallisationsprozess nach dem Fügeprozess hauptsächlich die Kristallphase Ba₄Si₆O₁₆ bilden.

Die Summe der Glasbildner bestimmt wesentlich das Kristallisationsverhalten. Stabile Gläser ergeben sich in dem erfindungsgemäßen Glassystem bei einer Summe der Anteile der Glasbildner SiO₂ und B₂O₃ von 30% bis 53% (in Gew.-% auf Oxidbasis). Die Kriställisationseigenschaften können durch die weiteren Glasbestandteile wesentlich beeinflusst werden. Die kristallisationsstabilsten Gläser ergeben sich je nach weiteren Glasbestandteilen und deren Atomgewichten bei einer Summe von SiO₂ und B₂O₃ von 36 % bis 51 %. In einer bevorzugten Ausführungsform weist das kristallisierende Glaslot daher eine Summe von SiO₂ und B₂O₃ von 36 % bis 51 % auf (in Gew.-% auf Oxidbasis).

Bevorzugt weist das erfindungsgemäße kristallisierende Glaslot einen linearen thermischen Ausdehnungskoeffizienten α_{(20-300),G} im glasigen Zustand von 6·10⁻⁶ K⁻¹ bis 11·10⁻⁶ K⁻¹ auf, wobei der Index G die auf den amorphen, glasigen Zustand bezogene Größe kennzeichnet. Das bedeutet, dass der thermische Ausdehnungskoeffizient des Grundglases und/oder des beim Lötvorgang nicht kristallisierten Glaslotes den genannten Wertebereich aufweist. Im kristallisierten Zustand, d.h. wenn das Glaslot beim Lötvorgang zumindest teilweise kristallisiert, weist es bevorzugt einen thermischen Ausdehnungskoeffizienten α_{(20-300), K} von 8·10⁻⁶ K⁻¹ bis 13·10⁻⁶ K⁻¹ auf, wobei der Index K die auf den kristallisierten Zustand bezogene Größe kennzeichnet.

Typischerweise ist der Kristallisationsprozess daher mit einer geringen Zunahme des thermischen Ausdehnungskoeffizienten verbunden. Aufgrund der geringen Unterschiede in der thermischen Ausdehnung vor und nach der Kristallisation werden durch den Kristallisationsprozess jedoch lediglich geringe mechanische Spannungen in die Verschmelzung eingebracht, die deren Stabilität nicht gefährden.

Das kristallisierende Glaslot kann ferner bis zu 0,5 % (in Gew.-% auf Oxidbasis) V₂O₅ und/oder Sb₂O₃ und/oder CoO enthalten. Diese Zusatzstoffe bewirken eine deutliche Erhöhung der Haftfestigkeit des Glaslotes auf metallischen Substraten.

Ein weiterer bevorzugter optionaler Zusatzstoff ist ZrO₂ in einer Menge von bis zu 5% (in Gew.-% auf Oxidbasis). ZrO₂ wirkt als Keimbildner und durch dessen Zugabe kann somit das Kristallisationsverhalten sowie auch die Kristallgröße beeinflusst werden. Die Zusammensetzung des Lotglases wird dabei bevorzugt so eingestellt, dass es langsam kristallisiert. Würde es bereits sehr stark kristallisieren, ist eine ausreichende Benetzung oft nicht gegeben. Insbesondere soll das Lotglas beim Herstellen einer Fügeverbindung im allgemeinen in nicht kristallisierter oder teilkristallisierter Form in die zu lötende Verbindungsstelle eingebracht werden können, da die für die Benetzung der zu verschmelzenden Bauteile benötigte Temperatur dann tiefer liegt.

Die thermische Ausdehnung des kristallisierenden Glaslotes korreliert insbesondere mit dem molaren Verhältnis von SiO₂ zu BaO. In einer bevorzugten Ausführungsform wird daher vorgesehen, dass das molare Verhältnis von SiO₂ zu BaO kleiner 2,5 und ganz besonders bevorzugt kleiner als 2,3 ist. Liegt das molare Verhältnis von SiO₂ zu BaO über 2,5, so ist im Allgemeinen die thermische Ausdehnung zu gering und der Zielbereich der thermischen Ausdehnung kann auch durch Füllstoffe nicht mehr erreicht werden.

Das erfindungsgemäße kristallisierende Glaslot weist bevorzugt eine Halbkugeltemperatur von 850 °C bis 1080 °C auf, und kann entsprechend etwa bei dieser Temperatur für die Fügeverbindung eingesetzt werden.

Das erfindungsgemäße kristallisierende Glaslot wird im Allgemeinen hergestellt, indem das Lotglas nach dessen Herstellung in einer konventionellen Glasschmelze zu einem Glaspulver gemahlen wird, das z.B. in Form einer dispensfähigen Paste oder eines vorgesinterten Formkörpers in die Fügeverbindung eingebracht werden kann. Das aus dem erschmolzenen Lotglas hergestellte kristallisierende Glaslot weist vor dem Lötprozess vorzugsweise einen amorphen, nicht kristallinen Zustand auf.

Dem in Pulverform vorliegenden kristallisierenden Glaslot können vor oder bei der Weiterverarbeitung zu den oben genannten Pasten und Sinterkörpern erfindungsgemäß zusätzlich bis zu 35% (in Gew.-% auf Oxidbasis, bezogen auf die Gesamtmasse von Glaslot und Füllstoff) eines bevorzugt kristallinen Füllstoffes ebenfalls in Pulverform zugegeben werden, so dass ein Komposit erhalten wird. Die Eigenschaften des Komposits können durch den Füllstoff gegenüber den Eigenschaften des füllstofffreien Glaslotes positiv verändert und eingestellt werden. So beeinflusst der Füllstoff, dessen Korngrößenverteilung und natürlich dessen Mengenanteil z.B. die thermische Ausdehnung und die Kristallisationsgeschwindigkeit.

Bevorzugt wird als Füllstoff Sanbornit (BaSiO₃), 3YSZ (Yttrium stabilisiertes Zirkonoxid), Wollastonit (CaSiO₃) oder Enstatit (Mg₂Si₂O₆) oder eine beliebige Kombination dieser Stoffe eingesetzt. Die Zugabe dieses Füllstoffes ermöglicht eine Anpassung des thermischen Ausdehnungskoeffizienten des kristallisierten Grundglases α_{(20-300), K}, wie in Tabelle2am Beispiel B1 zu sehen ist. Der thermische Ausdehnungskoeffizient im Temperaturbereich 20 °C bis 300 °C des kristallisierten Komposits α_{(20-300), K} liegt im Bereich 8·10⁻⁶ K⁻¹ bis 12·10⁻⁶ K⁻¹, der im Temperaturbereich 20 °C bis 750 °C α_{(20-750), K} im Bereich von 9,5·10⁻⁶ K⁻¹ bis 14,5·10⁻⁶ K⁻¹.

Die erfindungsgemäßen Komposite weisen bevorzugt eine Halbkugeltemperatur von 850 °C bis 1100 °C auf.

Optimale Festigkeiten einer Fügeverbindung werden erreicht, wenn das Lot in der thermischen Ausdehnung optimal an die zu verschmelzenden Materialien angepasst ist. Ferner dürfen auch durch eine Änderung des thermischen Ausdehnungskoeffizienten durch den Kristallisationsprozess keine zu großen Spannungen in dem Lot entstehen. Das erfindungsgemäße Glaslot stellt dies zum einen durch die Vermeidung von unerwünschten Phasen sicher, wie bereits erläutert, zum anderen zeichnen sich das erfindungsgemäße Glaslote sowie das daraus hergestellte Komposit dadurch aus, dass die Differenz in der thermischen Ausdehnung α₍₂₀₋₃₀₀₎ vor und nach dem Kristallisationsprozess kleiner 2·10⁻⁶ K⁻¹ und bevorzugt kleiner 1·10⁻⁶K⁻¹ ist.

Das erfindungsgemäße kristallisierende Glaslot und das daraus erhaltene Komposit zeichnen sich dadurch aus, dass der Anteil der amorphen Phase im kristallisierten Zustand mindestens 10 Gew.-% beträgt. Der zumindest teilweise kristalline Zustand eines Komposits nach der Kristallisation wird analog zu dem füllstofffreien kristallisierenden Glaslot als kristallisiert bezeichnet, auch wenn noch amorphe glasige Phasen vorhanden sein können. Die vorliegenden Glaslote und Komposite weisen auch nach Kristallisation eine solche amorphe Phase auf, welche die Sprödigkeit des Lotes herabsetzt und so die Festigkeit der Fügeverbindung vorteilhaft steigert. Ebenso können sich durch die amorphe Phase kleine Risse in der Lotglasverbindung selbst ausheilen.

Das erfindungsgemäße kristallisierende Glaslot ist aufgrund seiner physikalischen Eigenschaften besonders, geeignet für die Herstellung von hochtemperaturfesten Fügeverbindungen. Unter hochtemperaturfest wird im Sinne der Erfindung ein Temperaturbereich von mehr als etwa 650 °C als Dauereinsatztemperatur verstanden. Solche Fügeverbindungen können besonders vorteilhaft in Brennstoffzellen, insbesondere SOFC, eingesetzt werden. Ein Beispiel einer Anwendung in Brennstoffzellen ist das Verbinden von einzelnen SOFCs zu einem SOFC-Stack.

Das erfindungsgemäße kristallisierende Glaslot und/oder Komposit kann allerdings auch zur Herstellung von Sinterkörpern mit hoher Temperaturbeständigkeit verwendet werden. Herstellungsverfahren von Sinterkörpern sind hinlänglich bekannt. Im Allgemeinen wird dabei das Ausgangsmaterial des erfindungsgemäßen Glaslotes in Pulverform miteinander vermischt, mit einem im allgemeinen organischen Binder vermengt und in die gewünschte Form gepresst. Statt der Pulver der Ausgangsmaterialien kann auch ein bereits aufgeschmolzenes erfindungsgemäßes Glas vermahlen und mit dem Binder vermischt werden. Der gepresste Glas-Binder-Körper wird daraufhin auf Sintertemperatur gebracht, wobei der Binder ausbrennen kann und die Glaskomponenten bei der Sintertemperatur zusammensintern können. Der so erhaltene Sinterkörper kann daraufhin in Kontakt mit den zu verbindenden Bauteilen gebracht werden und durch einen Lötvorgang diese verbinden und/oder mit diesen verbunden werden.

Die Verwendung von Sinterkörpern beim Verlöten hat den Vorteil, dass der Sinterkörper ein Formbauteil ist und in nahezu beliebige Geometrien gebracht werden kann. Eine beispielsweise häufig verwendete Form ist ein Hohlzylinder, der zusammen mit einem elektrischen Kontaktstift in Durchführungsöffnungen von Metallbauteilen eingebracht werden kann, um durch die Verlötung eine vorzugsweise hermetisch dichte Glas-Metall-Durchführung mit einem elektrisch isolierten Kontaktstift zu erhalten. Solche Glas-Metall-Durchführungen werden in vielen elektrischen Bauteilen eingesetzt und sind dem Fachmann bekannt.

Eine weitere bevorzugte Anwendung des erfindungsgemäßen kristallisierenden Glaslots und/oder Komposits ist die Herstellung von Folien, die das Glaslot und/oder das Komposit beinhalten. Solche Folien sind ähnlich dem zuvor beschriebenen Sinterkörper, können aber weitgehend flexibel ausgeführt sein. Aus ihnen können Formen ausgestanzt und auf vorteilhafte Weise dazu verwendet werden, um flächige Bauteile miteinander zu verbinden.

Die Erfindung wird im folgenden anhand der Eigenschaften erfindungsgemäßer kristallisierender Glaslote sowie anhand von Vergleichsbeispielen näher beschrieben.

Zuerst wurde das Lotglas in einer Glasschmelze erschmolzen. An dem in der Regel in Blockglas, zumindest in massiver Form vorliegenden Lotglas wurden folgende Eigenschaften gemessen, wobei der Index G die am Lotglas bestimmten physikalischen Eigenschaften kennzeichnet.
- α_{(20-300), G}: linearer thermischer Ausdehnungskoeffizient von 20 °C bis 300 °C
- T_{g, G}: Glasübergangstemperatur, oder kurz Übergangstemperatur
- EW_{G}: Erweichungstemperatur, bei dieser Temperatur beträgt der Logarithmus der Viskosität 7,6
- ρG: Dichte

Die Zusammensetzung der Lotgläser sowie deren physikalische Eigenschaften sind in der Tabelle 1 zusammengefasst.

Nach der Charakterisierung des Lotglases wird aus dem Lotglas durch einen Mahlprozess das im allgemeinen pulverförmige Glaslot hergestellt. In den vorliegenden Beispielen wurde aus den erschmolzenen Lotgläsern ein Pulver mit einer Korngrößenverteilung mit einem D(50) von ca. 10 µm und einem D(99) < 63 µm bereitgestellt und mit einem Binder zu einer dispensfähigen Paste verarbeitet. Pulver und Binder wurden mit einem Dreiwalzwerk homogenisiert. Bei dem Binder handelt es sich im Allgemeinen um organische Substanzen wie z.B. Nitrocellulose, Ethylcellulose oder Acrylatbinder. Er hat im allgemeinen keinen weiteren Einfluss auf die Eigenschaften des kristallisierten Glaslotes, sollte jedoch so ausgewählt werden, dass er beim Aufheizvorgang vollständig ausgebrannt werden kann.

Anschließend erfolgt die thermische Charakterisierung der Glaslote mittels eines Heiztischmikroskopes. Aus dem zu charakterisierenden Lotglas bzw. Komposit in Pulverform wird dafür ein zylinderförmiger Probenkörper gepresst, der auf einer keramischen Grundplatte mit 10 K/min aufgeheizt wird: Die Formänderungen des Probenkörpers werden beobachtet, wobei sich mit steigender Temperatur für eine nichtkristallisierende Probe in der Regel folgende charakteristische Punkte ergeben, denen sich bestimmte Viskositäten zuordnen lassen:
- Sinterbeginn:: Bei dieser Temperatur beginnen die Körner des Pulvers zu verschmelzen. Dadurch nimmt die Höhe des Probenkörpers ab. Der Logarithmus der Viskosität beträgt etwa 10 +/- 0,3.
- Erweichungstemp.: EW_{K}: Diese Temperatur EW_{K} ist durch eine einsetzende Verrun-dung der Kanten des Probezylinders gekennzeichnet. Der Logarithmus der Viskosität beträgt etwa 8,2.
- Sphärischtemp.:: Temperatur, bei welcher der Logarithmus der Viskosität etwa 6,1 beträgt
- Halbkugeltemp.:: Der Probenkörper hat bei dieser Temperatur annähernd die Form einer Halbkugel. Der Logarithmus der Viskosität beträgt etwa 4,6 +/- 0,1.
- Fließtemperatur:: Bei dieser Temperatur beträgt die Höhe des Probenkörpers ca.1/3 der Ausgangshöhe. Der Logarithmus der Viskosität beträgt etwa 4,1 +/- 0,1.

Eine deutliche Abweichung von diesem Verhalten wird jedoch beobachtet, wenn während des langsamen Aufheizens des Probenkörpers bereits eine Kristallisation eintritt. In diesem Fall kann der Probenkörper bis zu einer deutlich höheren Temperatur als das zugrunde liegende Grundglas stabil bleiben, und weist dann entsprechend dem Verhalten eines kristallinen Festkörpers eine Art Schmelzpunkt auf, bei dem es im Gegensatz zu einem Glas zu einem schlagartigen Übergang in die flüssige Phase kommt. In diesem Fall kann es sein, dass eine Sphärischtemperatur oder eine Halbkugeltemperatur nicht bestimmt werden können.

Nach Abschluss des Kristallisationsprozesses wurden an dem kristallisierten Glaslot ebenfalls die Übergangstemperatur T_{g, K} sowie die thermische Ausdehnung α(20-300), _{K} aus der dilatrometrischen Ausdehnungskurve im Temperaturbereich von 20 bis 300 °C bestimmt, wobei die am kristallisierten Glaslot gemessenen Eigenschaften durch den Index K gekennzeichnet sind. Die Bestimmung eines T_{g,K} ist nur möglich, wenn noch eine amorphe Restphase in dem kristallisierten Glaslot vorhanden ist. Bei vollständig kristallisierter Probe ist kein T_{g,K} mehr nachweisbar.

Die mit dem Heiztischmikroskop ermittelten thermischen Eigenschaften der Glaslote sowie nach der Kristallisation sind ebenfalls in der Tabelle 1 zusammengefasst.

**Tabelle 1: Zusammensetzung und Eigenschaften des Lotglases und des kristallisierenden Glaslotes**

| | | B1 | B2 | n. erf. | n. erf. | B5 | C1 | C2 |
|---|---|---|---|---|---|---|---|---|
| Zusammensetzung des Lotglases | | | | | | | | |
| SiO₂ | Gew.-% | 28,1 | 30,8 | 39 | 37 | 35 | 32,4 | 32,0 |
| BaO | Gew.-% | 55,8 | 51,7 | 49,8 | 47,8 | 47,8 | 50,2 | 60,0 |
| B₂O₃ | Gew.-% | 10,0 | 8,4 | 11,2 | 11,2 | 11,2 | 3,2 | 7,0 |
| Al₂O₃ | Gew.-% | 1,7 | 1,8 | | | | 1,1 | 1,0 |
| CaO | Gew.-% | | | | | 2 | | |
| MgO | Gew.-% | 4,4 | 7,0 | | | | | |
| SrO | Gew.-% | | | | | | 13,1 | |
| TiO₂ | Gew.-% | | | | 4 | 4 | | |
| V₂O₅ | Gew.-% | | 0,3 | | | | | |

| Phys. Eigenschaften des Lotglases vor der Kristallisation | | | | | | | | |
|---|---|---|---|---|---|---|---|---|
| α_{(20-300), G} | 10⁻⁶ K⁻¹ | 9,1 | 8,8 | 7,7 | 7,53 | 8,1 | 10,0 | 9,4 |
| T_{g, G} | °C | 622 | 634 | 660 | 668 | 662 | 648 | 643 |
| EW_{G} | °C | 730 | 744 | | | | | |
| ρG | g/cm³ | 3,81 | 3,70 | | 3,58 | 3,56 | 3,97 | 3,93 |

| Eigenschaften des kristallisierenden Glaslotes (Heiztischmikroskop) sowie nach der Kristallisation | | | | | | | | |
|---|---|---|---|---|---|---|---|---|
| Sinterbeginn | °C | 653 | 665 | 700 | 706 | 708 | 683 | 672 |
| EW_{K} | °C | 757 | 779 | 1036 | 984 | 787 | 1096 | 1045 |
| Sphärischtemperatur | °C | 786 | - | | | 862 | - | - |
| Halbkugeltemperatur | °C | 853 | 876 | 1063 | 1010 | 1002 | 1158 | 1127 |
| Fließtemp.. | °C | 906 | 951 | 1074 | 1027 | 1021 | 1165 | 1137 |
| α_{(20-300), K} | 10⁻⁶ K⁻¹ | 9,8 | 9,9 | 11,3 | 12,5 | 10,21 | 11,4 | - |
| T_{g, K} | °C | 614 | 624 | | | | - | - |

Die Tatsache, dass aus der thermischen Dehnungskurve ein T_{g, K} ermittelt werden kann, zeigt das Vorhandensein einer Restglasphase auf. Der im Vergleich zum amorphen Lotglas geringfügig niedrigere T_{g, K} kann durch die Abreicherung von SiO₂ in der Glasphase erklärt werden, da Bariumsilikate(z.B. Ba₅Si₈O₂₁) gebildet werden. Die amorphe Restglasphase der erfindungsgemäßen Systeme bewirkt eine geringere Sprödigkeit des Glaslotes, die sich positiv auf die mechanische Festigkeit auswirkt. Die erfindungsgemäßen Systeme weisen daher nach der Kristallisation bevorzugt einen kristallinen Anteil von 20 % bis 80 % und entsprechend eine Restglasphase (Gew.-%) von 20 % bis 80 % auf. Sowohl eine ausbleibende als auch eine vollständige Kristallisation sind nicht erwünscht.

Die Glaslote der Vergleichsbeispiele C1 und C2 sowie die Glaslote der in Tabelle 1 mit "n. erf." (d.h. nicht erfindungsgemäß) bezeichneten Beispiele weisen nicht das erfindungsgemäß erwünschte Verhalten auf. Der extrem hohe EW_{K} von C1 und C2 weist auf eine sehr früh einsetzende Kristallisation, also eine starke Kristallisationsneigung, hin. Die starke Kristallisationsneigung von Vergleichsbeispiel C1 kann auf den zu geringen B₂O₃-Gehalt von nur 3,2 % zurückgeführt werden. Die starke Kristallisationsneigung von Vergleichsbeispiel C2 kann auf die Abwesenheit weiterer Erdalkalien der Gruppe CaO, MgO und SrO in Verbindung mit dem hohen Bariumanteil und dem ebenfalls geringen B₂O₃-Gehalt im Vergleich mit den Beispielen B1 und B2 zurückgeführt werden.

Die Beispiele B1, B2 und B5 weisen hingegen das erfindungsgemäß gewünschte Verhalten auf. Diese erreichen Halbkugeltemperaturen deutlich unter 1100 °C.

Das Lotglas aus Beispiel B1 wurde demzufolge als Grundglas für die Herstellung von Kompositen verwendet, wobei dem Pulver des Grundglases zwischen 10 % bis 25 %Füllstoffe zugesetzt wurden. An den erhaltenen Kompositen wurden analog zu den füllstofffreien Lotgläsern dieselben Eigenschaften bestimmt und in Tabelle 2 im Quervergleich zum füllstofffreien Lotglas zusammengefasst. In Tabelle 2 ist ferner der lineare thermische Ausdehnungskoeffizient α_{(20-750), K} aufgeführt, welcher die Temperatur-Dehnungseigenschaften des Komposits im Temperaturbereich von 20 °C bis 750 °C charakterisiert Dieser Wert belegt, dass die thermische Ausdehnung über den gesamten für die Verarbeitung relevanten Temperaturbereich im Zielbereich liegt. Außerdem zeigt der Wert, dass die Probe kristallisiert ist. An dem Grundglas aus Beispiel 5 ohne Füllstoffe ist der Wert nicht bestimmbar, da dieses einen EW_{G} von 730 °C aufweist und somit vor Erreichen der 750 °C erweicht. Insbesondere bei der Beurteilung der Thermozyklierbarkeit der Materialien ist der thermische Ausdehnungskoeffizient α_{(20-750), K} relevanter als der α_{(20-300), K}.

**Tabelle 2: Eigenschaften von Kompositen basierend auf Beispiel B1 (Heiz tischmikroskop) sowie nach der Kristallisation**

| | | B1 | 90% B1 + 10% 3YSZ | 85% B1 + 15% BaSiO₃ | 75% B1 + 25% BaSiO₃ |
|---|---|---|---|---|---|
| Sinterbeginn | °C | 653 | 655 | 705 | 660 |
| Erweichungstemp. EW_{K} | °C | 757 | 785 | 858 | 908 |
| Sphärischtemp. | °C | 786 | - | 895 | - |
| Halbkugeltemp. | °C | 853 | 877 | 1007 | 944 |
| Fließtemperatur | °C | 906 | 931 | 1120 | 991 |
| α_{(20-300), K} | 10⁻⁶ K⁻¹ | 9,8 | 10,0 | 9,5 | 10,3 |
| α_{(20-750), K} | 10⁻⁶ K⁻¹ | Nicht bestimmbar, da bereits erweicht | 14,2 | 12,7 | 13,2 |

Der Vergleich mit B1 zeigt, dass im Fall der Zugabe von 10 % 3YSZ oder 25 % BaSiO₃ (Sanbornit) der thermische Ausdehnungskoeffizient α_{(20-300), K} des Komposits größer als der des kristallisierten Glaslots alleine ist, während im Fall der Zugabe von 15 % BaSiO₃ der Wert kleiner ist. Dies belegt, dass durch die Auswahl und durch die Menge der Füllstoffe sowohl eine positive oder auch negative Anpassung des thermischen Ausdehnungskoeffizienten erreicht werden kann.

Die Halbkugeltemperaturen und damit auch die Löttemperaturen liegen bei den in Tabelle 3 dargestellten Kompositen höher als bei Beispiel B1. Allerdings ist die Fließtemperatur im Falle der Komposite höher als die von Beispiel B1.

Mit den erfindungsgemäßen Kompositen wurden erfolgreich Fügeverbindungen mit metallischem Interkonnektormaterial hergestellt. Zuerst wurde die Fügeverbindung mit einer Aufheizgeschwindigkeit von 5 K/min auf 450 °C aufgeheizt und 30 Minuten bei 450 °C gehalten. Anschließend wurde die Fügeverbindung mit 2 K/min weiter auf 950 °C aufgeheizt und 30 Minuten gehalten. Anschließend wurde die Fügeverbindung mit 2 K/min auf 860 °C abgekühlt und 10 Stunden gehalten. Abkühlen auf Raumtemperatur erfolgt ebenfalls mit 2 K/min. Während des Fügevorganges wurde die Fügeverbindung mit einem statischen Gewicht beaufschlagt (ca. 15 g/cm²).

Die erfindungsgemäßen kristallisierenden Glaslote und Komposite Vereinen alle positiven Eigenschaften gemäß Aufgabe der Erfindung miteinander. Das Lotglas als Vorprodukt lässt sich mit konventionellen Schmelzverfahren mit gutem Einschmelzverhalten und nicht zu hohen Schmelztemperaturen herstellen. Es weist eine thermische Ausdehnung in dem angestrebten Bereich auf sowie insbesondere keine zu starke Kristallisationsneigung bzw. spontane Kristallisation. Durch die Zusammensetzung wird die Bildung von unerwünschten Kristallphasen wirkungsvoll unterbunden, was dauerhaft stabile spannungsarme Fügeverbindungen ermöglicht.

Die erfindungsgemäßen Komposite können über verschiedene Füllstoffe über einen großen Bereich an die thermischen Ausdehnung der Interkonnektormaterialien angepasst werden.

Mit den erfindungsgemäßen kristallisierenden Glasloten und Komposite werden bei geringen Verarbeitungstemperaturen von etwa maximal 1000 °C Fügeverbindungen erhalten, die hohe Betriebstemperaturen von etwa 850 °C ermöglichen. Ferner ermöglicht die gute Benetzung der Interkonnektormaterialien durch die langsame Kristallisation erst nach dem Einbringen des Lotes dauerhaft stabile Fügeverbindungen.

## Patentansprüche

1. Kristallisierendes Glaslot für Hochtemperaturanwendungen, enthaltend (in Gew.-% auf Oxidbasis) 45 % bis 60 % BaO, 25 % bis 40 % SiO₂, 5 % bis 15 % B₂O₃, 0 bis < 2 % Al₂O₃, sowie zumindest ein Erdalkalioxid aus der Gruppe MgO, CaO und SrO, wobei die Summe der Erdalkalioxide MgO, CaO und SrO von 2% bis 20%, beträgt.

2. Kristallisierendes Glaslot nach Anspruch 1 enthaltend (in Gew.-% auf Oxidbasis) 0 % bis 5% CaO.

3. Kristallisierendes Glaslot nach mindestens einem der vorhergehenden Ansprüche, wobei die Summe von SiO₂ und B₂O₃ 30 % bis 53 %, bevorzugt 36 % bis 51 % beträgt (in Gew.-% auf Oxidbasis).

4. Kristallisierendes Glaslot nach mindestens einem der vorhergehenden Ansprüche mit einem thermischen Ausdehnungskoeffizienten im glasigen Zustand α_{(20-300), G} von 6·10⁻⁶ K⁻¹ bis 11·10⁻⁶ K⁻¹ und/oder im kristallisierten Zustand α₍₂₀₋₃₀₀₎, K von 8·10⁻⁶ K⁻¹ bis 13·10⁻⁶ K⁻¹.

5. Kristallisierendes Glaslot nach mindestens einem der vorhergehenden Ansprüche, enthaltend zusätzlich jeweils (in Gew.-% auf Oxidbasis) bis zu 0,5 % V₂O₅ und/oder Sb₂O₃ und/oder CoO.

6. Kristallisierendes Glaslot nach mindestens einem der vorhergehenden Ansprüche, enthaltend zusätzlich (in Gew.-% auf Oxidbasis) bis zu 5% ZrO₂.

7. Kristallisierendes Glaslot nach mindestens einem der vorhergehenden Ansprüche, wobei das molare Verhältnis von SiO₂ zu BaO kleiner als 2,5 und bevorzugt kleiner als 2,3 ist.

8. Kristallisierendes Glaslot nach mindestens einem der vorhergehenden Ansprüche mit einer Halbkugeltemperatur von 850 °C bis 1080 °C.

9. Komposit umfassend ein kristallisierendes Glaslot nach mindestens einem der vorhergehenden Ansprüche und zusätzlich (in Gew.-% auf Oxidbasis) bis zu 35 % eines kristallinen Füllstoffes.

10. Komposit nach Anspruch 9, wobei der kristalline Füllstoff Sanbornit und/oder 3YSZ und/oder Wollastonit und/oder Enstatit umfasst.

11. Komposit nach mindestens einem der Ansprüche 9 bis 10 mit einem thermischen Ausdehnungskoeffizienten in der Kristallphase α₍₂₀₋₇₅₀₎, K von 9,5·10⁻⁶ K⁻¹ bis 14,5·10⁻⁶ K⁻¹.

12. Komposit nach mindestens einem der Ansprüche 9 bis 11 mit einer Halbkugeltemperatur von 850 °C bis 1100 °C.

13. Kristallisierendes Glaslot oder Komposit nach mindestens einem der Ansprüche 1 bis 12, **dadurch gekennzeichnet, dass** die Differenz in der thermischen Ausdehnung α₍₂₀₋₃₀₀₎ vor und nach dem Kristallisationsprozess kleiner 2·10⁻⁶ K⁻¹, und bevorzugt kleiner 1·10⁻⁶ K⁻¹ ist.

14. Kristallisierendes Glaslot oder Komposit nach mindestens einem der vorhergehenden Ansprüche, wobei der Anteil der amorphen Phase im kristallisierten Zustand mindestens 10 Gew.-% beträgt.

15. Verwendung eines kristallisierenden Glaslotes und/oder Komposites nach mindestens einem der vorhergehenden Ansprüche zur Herstellung von Hochtemperaturfügeverbindungen, insbesondere für Brennstoffzellen.

16. Verwendung eines kristallisierenden Glaslotes und/oder Komposites nach mindestens einem der Ansprüche 1 bis 14 in Sinterkörpern mit hoher Temperaturbeständigkeit.

17. Verwendung eines kristallisierenden Glaslotes und/oder Komposites nach mindestens einem der Ansprüche 1 bis 14 zur Herstellung von Folien mit hoher Temperaturbeständigkeit.

## Claims

1. A crystallizing glass solder for high temperature uses, containing (in % by weight on oxide basis) 45 % to 60 % of BaO, 25 % to 40 % of SiO₂, 5 % to 15 % of B₂O₃, 0 to < 2 % of Al₂O₃ as well as at least one alkaline earth oxide from the group MgO, CaO and SrO, wherein the sum of the alkaline earth oxides of MgO, CaO and SrO is 2 % to 20 %.

2. The crystallizing glass solder according to claim 1, containing (in % by weight on oxide basis) 0 % to 5 % of CaO.

3. The crystallizing glass solder according to at least one of the preceding claims, wherein the sum of SiO₂ and B₂O₃ is 30 % to 53 %, preferably 36 % to 51 % (in % by weight on oxide basis).

4. The crystallizing glass solder according to at least one of the preceding claims with a coefficient of thermal expansion in the glassy state α_{(20-300), G} of 6·10⁻⁶ K⁻¹ to 11·10⁻⁶ K⁻¹ and/or in the crystallized state α_{(20-300), C} of 8·10⁻⁶ K⁻¹ to 13·10⁻⁶ K¹.

5. The crystallizing glass solder according to at least one of the preceding claims, containing in addition each (in % by weight on oxide basis) up to 0.5 % of V₂O₅ and/or Sb₂O₃ and/or CoO.

6. The crystallizing glass solder according to at least one of the preceding claims, containing in addition (in % by weight on oxide basis) up to 5 % of ZrO₂.

7. The crystallizing glass solder according to at least one of the preceding claims, wherein the molar ratio of SiO₂ to BaO is lower than 2.5 and preferably lower than 2.3.

8. The crystallizing glass solder according to at least one of the preceding claims with a hemisphere temperature of 850 °C to 1080 °C.

9. A composite, comprising a crystallizing glass solder according to at least one of the preceding claims and in addition (in % by weight on oxide basis) up to 35 % of a crystalline filler.

10. The composite according to claim 9, wherein the crystalline filler comprises sanbornite and/or 3YSZ and/or wollastonite and/or enstatite.

11. The composite according to at least one of claims 9 to 10 with a coefficient of thermal expansion in the crystal phase α_{(20-750), C} of 9.5·10⁻⁶ K⁻¹ to 14.5·10⁻⁶ K⁻¹.

12. The composite according to at least one of claims 9 to 11 with a hemisphere temperature of 850 °C to 1100 °C.

13. The crystallizing glass solder or the composite according to at least one of claims 1 to 12, **characterized in that** the difference between the coefficients of thermal expansion α₍₂₀₋₃₀₀₎ before and after the crystallization process is lower than 2·10⁻⁶ K⁻¹, and preferably lower than 1·10⁻⁶ K⁻¹.

14. The crystallizing glass solder or the composite according to at least one of the preceding claims, wherein the proportion of the amorphous phase in the crystallized state is at least 10 % by weight.

15. A use of a crystallizing glass solder and/or a composite according to at least one of the preceding claims for the production of high temperature joining connections, in particularly for fuel cells.

16. A use of a crystallizing glass solder and/or a composite according to at least one of claims 1 to 14 in sintered compacts with high temperature resistance.

17. A use of a crystallizing glass solder and/or a composite according to at least one of claims 1 to 14 for the production of foils with high temperature resistance.

## Revendications

1. Soudure de verre cristallisante destinée à des applications à haute température, contenant (en % en poids sur base de l'oxyde) de 45 % à 60 % de BaO, de 25 % à 40 % de SiO₂, de 5 % à 15 % de B₂O₃, de 0 à < 2 % de Al₂O₃, et au moins un oxyde de métal alcalino-terreux du groupe MgO, CaO et SrO, la somme des oxydes de métaux alcalino-terreux MgO, CaO, SrO étant allant de 2 % à 20 %.

2. Soudure de verre cristallisante selon la revendication 1, comprenant (en % en poids de l'oxyde) de 0 % à 53 % de CaO.

3. Soudure de verre cristallisante selon l'une au moins des revendications précédentes, dans laquelle la somme de SiO₂ et de B₂O₃ est 30 % à 53 %, de préférence 36 % à 51 % (% en poids de l'oxyde).

4. Soudure de verre cristallisante à l'une au moins des revendications précédentes, ayant un coefficient de dilatation thermique à l'état vitreux α_{(20-300),} G de 6·10⁻⁶ K⁻¹ à 11·10⁻⁶ K⁻¹ et/ou à l'état cristallisé α₍₂₀₋₃₀₀₎, K de 8·10⁻⁶ K⁻¹ à 13·10⁻⁶ K⁻¹.

5. Soudure de verre cristallisant selon l'une au moins des revendications précédentes, contenant en outre (en % poids de l'oxyde), jusqu'à 0,5 % de V₂O₅ et/ou Sb₂O₃ et/ou CoO.

6. Soude de verre cristallisante selon au moins l'une des revendications précédentes, contenant en outre (en % en poids de l'oxyde) jusqu'à 5 % de ZrO₂.

7. Soudure de verre cristallisante selon l'une au moins des revendications précédentes, le rapport molaire de SiO₂ à BaO est inférieur à 2,5 et de préférence inférieur à 2,3.

8. Soudure de verre cristallisante selon l'une au moins des revendications précédentes ayant une température de fusion des cendres de 850 °C à 1080 °C.

9. Composite comprenant une soudure de verre cristallisante selon l'une au moins des revendications précédentes, et en outre (en % poids de l'oxyde) jusqu'à 35 % d'une charge cristalline.

10. Composite selon la revendication 9, dans lequel la charge cristalline comprend de la sanbornite et/ou du 3YSZ et/ou de la wollastonite et/ou de l'enstatite.

11. Composite selon l'une au moins des revendications 9 à 10 ayant un coefficient de dilatation thermique dans la phase cristalline de α₍₂₀₋₃₀₀₎, K de 9,5·10⁻⁶ K⁻¹ à 14,5·10⁻⁶ K⁻¹.

12. Composite selon l'une au moins des revendications 9 à 11 ayant une température de fusion des cendres de 850 °C à 1100 °C.

13. Soudure de verre cristallisante ou composite selon l'une au moins des revendications 1 à 12, **caractérisé en ce que** la différence de dilatation thermique α₍₂₀₋₃₀₀₎, avant et après le processus de cristallisation, est inférieure à 2·10⁻⁶ K⁻¹, et de préférence inférieure 1·10⁻⁶ K⁻¹.

14. Soudure de verre cristallisante ou composite selon l'une au moins des revendications précédentes, la proportion de la phase amorphe à l'état cristallisé est d'au moins 10 % en poids.

15. Utilisation d'une soudure de verre cristallisante et/ou d'un composite selon l'une au moins des revendications précédentes dans la fabrication de composés de jonction à haute température, en particulier pour des piles à combustible.

16. Utilisation d'une soudure de verre cristallisante et/ou d'un composite selon l'une au moins des revendications 1 à 14 dans des corps frittes à haute résistance thermique.

17. Utilisation d'une soudure de verre cristallisante et/ou d'un composite selon l'une au moins des revendications 1 à 14 dans la fabrication de films à haute résistance thermique.
